# FASCICULE DE BREVET EUROPEEN

(11) **EP 3 303 069 B1**
(45) Date de publication et mention de la délivrance du brevet: **10.07.2019**
(21) Numéro de dépôt: 16725548.8
(22) Date de dépôt: 30.05.2016
(51) Int. Cl.: B60S 1/16, B60S 1/34

(54) **ENSEMBLE D'ENTRAINEMENT A ARBRE ROTATIF POUR UN ENSEMBLE D'ESSUYAGE DE VITRE DE VEHICULE AUTOMOBILE**
ANTRIEBSANORDNUNG MIT ROTIERENDER WELLE FÜR EINE SCHEIBENWISCHANLAGE EINES KRAFTFAHRZEUGS
DRIVE ASSEMBLY WITH A ROTATING SHAFT FOR A WINDOW-WIPING ASSEMBLY OF A MOTOR VEHICLE

(30) Priorité: 02.06.2015 FR 1555003
(43) Date de publication de la demande: 11.04.2018
(73) Titulaire: Valeo Systèmes d'Essuyage, 78320 Le Mesnil Saint Denis (FR)
(72) Inventeur: LASSALLE, Christophe, 78322 Le Mesnil Saint-Denis cedex (FR); VALLIERE, Jérome, 78322 Le Mesnil Saint-Denis cedex (FR)
(74) Mandataire: Valeo Systèmes d'Essuyage
(86) Numéro de dépôt international: PCT/EP2016/062148
(87) Numéro de publication internationale: WO 2016/193205

(56) Documents cités:
- DE-A1-102004 017 416
- FR-A1- 2 866 297
- US-A- 4 550 469

## Description

La présente invention a trait au domaine de l'essuyage de vitres des véhicules automobiles. Plus spécifiquement, elle concerne des systèmes d'essuyage et les moyens prévus dans ces systèmes pour l'entraînement en rotation d'un bras d'essuyage.

Le document US 4 550 469 divulgue un ensemble d'entraînement pour un bras d'essuyage selon le préambule de la revendication 1.

Les véhicules sont classiquement équipés d'un ensemble d'essuyage de pare-brise pour les nettoyer de l'eau de pluie, des débris, poussières et autres salissures. De tels ensembles d'essuyage comportent généralement un bras porteur d'une lame d'essuyage pour la maintenir au contact de la surface de la vitre à nettoyer. Le bras est monté à rotation pour que la lame puisse balayer une grande partie de la vitre à nettoyer, ce mouvement étant effectué par l'intermédiaire de moyens d'entraînement en rotation. Ces moyens d'entraînement comportent un actionneur, du type moteur électrique, dont l'arbre de sortie est connecté, par un jeu d'engrenages approprié, à un arbre rotatif porteur à son extrémité opposé du bras d'essuyage solidaire en rotation de l'arbre rotatif. La connexion entre l'arbre rotatif et le bras d'essuyage est notamment réalisé au moyen d'un agencement à vis en prise dans un alésage interne taraudé de l'arbre rotatif.

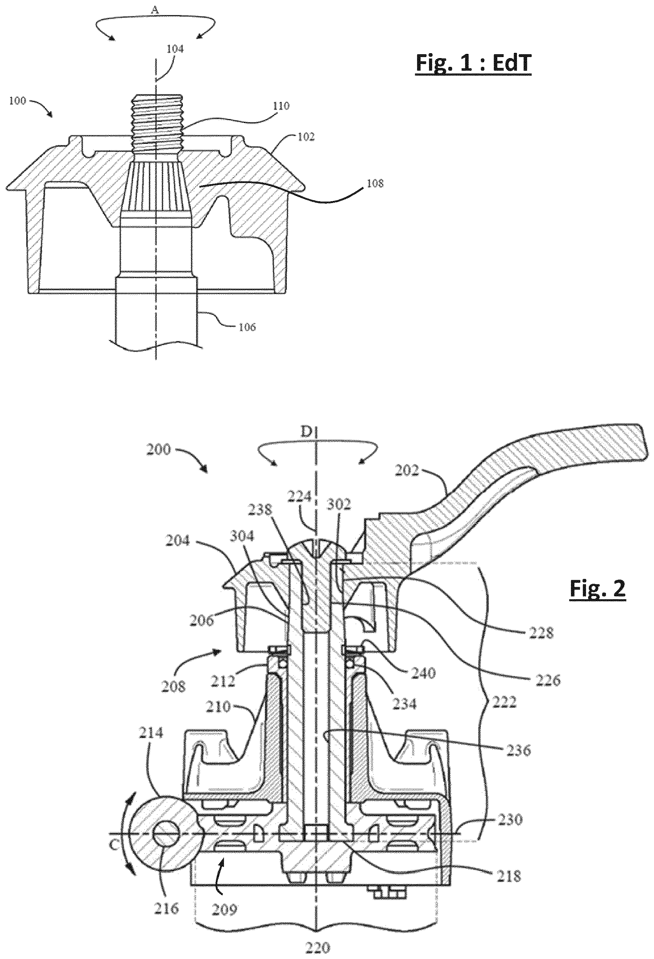

Sur la figure 1, on a illustré un agencement de fixation 100 entre un mécanisme d'entraînement et le bras d'essuyage tel qu'il est connu de l'art antérieur. Cet agencement 100 comprend une tête de bras d'essuyage 102, qui est rendu mobile en rotation autour d'un axe de rotation 104, par coopération avec un arbre rotatif 106. A cet effet, l'arbre présente à son extrémité libre une partie tronconique 108, portant sur sa face externe des cannelures, et qui est prolongée par une tige filetée 110. La tête de bras d'essuyage est placée autour de l'arbre rotatif dans la position illustrée sur la figure 1, dans laquelle les cannelures de la partie tronconique 108 coopèrent avec des cannelures correspondantes formées dans un alésage de ladite tête pour permettre l'entraînement en rotation de la tête lorsque l'arbre tourne. La tête est bloquée dans l'axe de rotation par un écrou, ici non représenté, qui vient en prise sur la tige filetée 110. L'arbre rotatif est réalisé en acier pour permettre le serrage de l'écrou et l'entraînement par cannelures.

Cependant, l'utilisation d'un tel arbre rotatif à base d'acier présente des inconvénients quant au poids et l'encombrement de l'ensemble d'essuyage, et les opérations de fabrication d'un tel arbre taraudé peuvent être longues, fastidieuses et coûteuses.

La présente invention vise à proposer un ensemble d'essuyage dans lequel les moyens d'entraînement du bras d'essuyage sont réalisés différemment, notamment pour éviter les inconvénients ci-dessus.

La présente invention concerne un ensemble d'entraînement pour un bras d'essuyage, dans lequel ledit bras d'essuyage présente une tête de bras d'essuyage entraîné par un arbre rotatif auquel ladite tête de bras d'essuyage est fixée par des moyens de fixation, ledit arbre rotatif étant entraîné par un arbre de sortie d'un actionneur. Selon l'invention, l'arbre rotatif est réalisé avec au moins une matière plastique

Selon l'invention, ledit arbre rotatif comporte une première partie adaptée pour coopérer avec ledit arbre de sortie ainsi qu'une seconde partie adaptée pour être solidaire de la tête de bras d'essuyage, chaque partie de l'arbre rotatif étant réalisé en matière en plastique. Ladite seconde partie présente la forme d'un tube creux s'étendant le long d'un premier axe longitudinal, avec une première extrémité portant lesdits moyens de fixation de la tête de bras d'essuyage et avec l'extrémité opposée étant prolongée par ladite première partie.

Selon différentes caractéristiques de l'invention, prises seules ou en combinaison :
- le tube creux de la seconde partie peut avoir une épaisseur constante ;
- ladite première partie peut consister en un pignon ;
- la première partie peut s'étendre sensiblement perpendiculairement à la seconde partie ;
- la première partie et la seconde partie peuvent être réalisées en une pièce monobloc ;
- la première partie peut être fabriquée à partir d'une première matière plastique tandis que la seconde partie peut être fabriquée à partir d'une deuxième matière plastique, la première matière plastique étant différent à partir de la seconde matière plastique ;
- la première matière plastique peut être plus résistante à l'usure et/ou aux chocs que la deuxième matière plastique ;
- la première partie peut être fabriquée à partir de polyoxyméthylène (POM) ;
- la tête de bras d'essuyage peut comprendre un alésage intérieur avec un premier profil interne et l'arbre rotatif peut comprendre à une première extrémité une forme extérieure avec un deuxième profil externe, le premier profil interne présentant une forme complémentaire de celle du deuxième profil externe de manière à coopérer longitudinalement ;
- le premier profil interne et le deuxième profil externe peuvent présenter chacun une forme polygonale, et notamment octogonale ;
- lesdits moyens de fixation peuvent comporter une vis auto-taraudeuse, insérée dans un alésage formé longitudinalement dans l'arbre rotatif ;
- la vis auto-taraudeuse peut s'étendre longitudinalement sur une distance équivalente à la zone de recouvrement du premier profil interne par le deuxième profil externe ;
- l'alésage peut présenter une paroi lisse ;
- l'arbre rotatif peut être logé dans un carter moteur de sorte que la première partie s'étend à l'intérieur du carter tandis que la seconde partie s'étend depuis ladite première partie jusqu'à l'extérieur du carter pour être solidaire de la tête du bras d'essuyage, ladite seconde partie étant monté à rotation à l'intérieur d'un fût du carter moteur ;
- la seconde partie de l'arbre rotatif peut être montée à l'intérieur dudit fût par l'intermédiaire d'une douille en acier fritté ;
- la douille peut être montée dans ledit fût de façon excentrée par rapport à ladite seconde partie.

La présente invention concerne également un ensemble d'essuyage de vitre d'un véhicule automobile comprenant au moins un ensemble d'entraînement tel qu'il vient d'être évoqué précédemment.

D'autres caractéristiques et avantages de l'invention apparaîtront à la lecture de la description détaillée d'un mode de réalisation qui va suivre et pour la compréhension de laquelle on se reportera aux dessins annexés parmi lesquels :
- la figure 1 est une représentation partielle, en coupe, d'un ensemble d'essuyage, et plus particulièrement de la liaison entre le bras d'essuyage et l'arbre rotatif d'entraînement de ce dernier, selon l'état de la technique ;
- la figure 2 est une vue, en coupe transversale, d'un ensemble d'entraînement pour un bras d'essuyage, selon les concepts de la présente invention ;
- la figure 3 est une vue en perspective, en coupe, illustrant la tête de bras d'essuyage et un arbre rotatif de l'ensemble d'entraînement de la figure 2, en conformité avec les concepts de la présente invention ;
- la figure 4 est une illustration schématique d'un pare-brise d'un véhicule et de deux ensembles d'essuyage chacun comportant un ensemble d'entraînement conformément aux aspects de la présente invention.

On va décrire un mode de réalisation préféré de l'invention, en se référant aux figures 2 à 4.

Sur la figure 2, l'ensemble d'entraînement 200 est configuré pour entraîner en rotation un bras d'essuyage 202, qui comporte au moins une tête 204 et un corps prolongeant radialement ladite tête et porteur d'une lame d'essuyage ici non représentée.

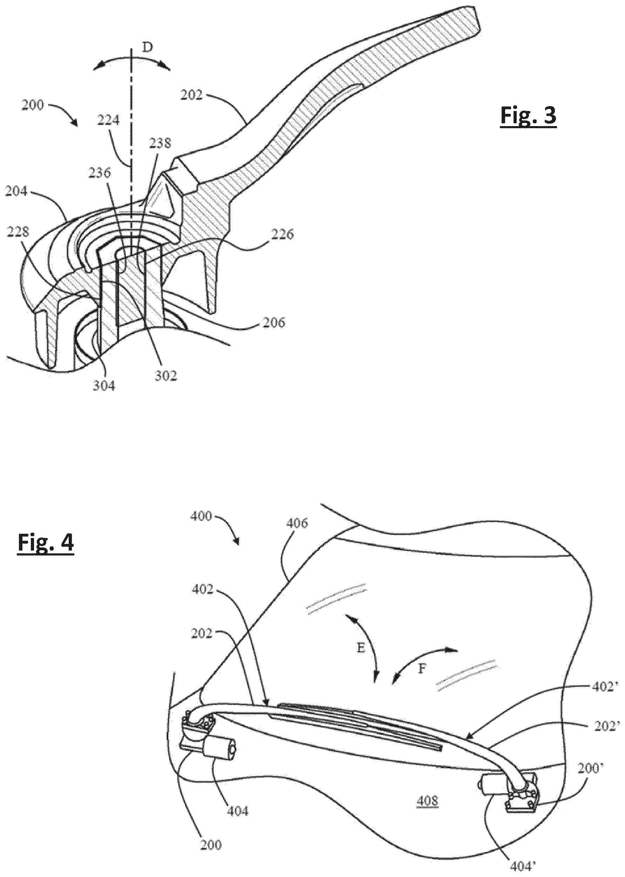

L'ensemble d'entraînement 200 comporte au moins un arbre rotatif 206 adapté à être raccordé à une première extrémité, via des moyens de fixation 208, à la tête de bras d'essuyage 204, et intégrant à une deuxième extrémité opposée un agencement de pignon 209, formant, avec un arbre de sortie 214 d'un actionneur électrique 404 (visible sur la figure 4) qui s'étend selon un axe moteur 216, des moyens d'entraînement à vis sans fin.

Ces moyens d'entraînement à vis sans fin sont logés dans un carter 210, qui comporte un fût par lequel s'échappe l'arbre rotatif 206 de manière à ce que sa première extrémité s'étende hors du carter pour porter la tête du bras d'essuyage. Tel qu'illustré sur la figure 2, une douille 212 est disposée dans ledit fût pour recevoir l'arbre rotatif.

L'arbre rotatif 206 est ainsi un moyen de transmission du mouvement de l'arbre de sortie 214 en un mouvement de la tête de bras d'essuyage 204. On décrira par la suite, en référence aux figures 2 à 4, les mouvements des différents composants de l'ensemble d'entraînement.

L'arbre rotatif 206 est réalisé en matière plastique. A titre d'exemple, on peut utiliser des plastiques de qualité supérieure, tels que l'acrylonitrile butadiène styrène (ABS), les polycarbonates, les matières plastiques thermodurcissables, et analogues, ou une combinaison de ceux-ci. Une structure formée par utilisation de ladite matière plastique peut conférer des propriétés mécaniques et thermiques suffisantes pour l'arbre de rotation 206 pour supporter les contraintes de fonctionnement. En outre, une capacité de torsion de l'arbre rotatif 206 peut être suffisante pour transmettre un degré approprié de couple de l'arbre de sortie 214 de la tête de bras d'essuyage 204. A cet effet, une structure de l'arbre rotatif 206 peut être suffisamment rigide pour encaisser les forces de torsion associées à ladite opération.

L'arbre rotatif 206, réalisé en matière plastique, comporte deux parties fonctionnellement distinctes, solidaires l'une de l'autre.

Une première partie 220 de l'arbre rotatif 206 comporte l'agencement de pignon 209, étant entendu qu'il peut consister en tout ou partie d'un pignon apte à s'engager et s'engrener avec l'arbre de sortie 214. En conséquence, l'arbre de sortie 214 est positionnée d'une manière relativement tangentielle à la première partie 220.

La première partie 220 peut être entraînée en rotation autour d'un premier axe longitudinal 224, et, ce faisant, le premier axe longitudinal 224 peut être sensiblement perpendiculaire à l'axe moteur 216. On comprend que l'on pourrait envisager une configuration différente dans laquelle la première partie est entraînée par l'arbre de commande sans que les axes soient perpendiculaires.

Une seconde partie 222 de l'arbre rotatif 206 est adaptée pour être en prise de manière fixe à une première extrémité 228 avec la tête de bras d'essuyage 204 via les moyens de fixation 208. Cette première extrémité pourra, du fait de son orientation arbitrairement choisie sur les figures, être nommée extrémité supérieure 228, sans que cela soit restrictif quant à la portée de l'invention. A l'extrémité opposée, ou extrémité inférieure 218, la seconde partie 222 est reliée fixement à la première partie 220. De cette manière, la seconde partie 222 est susceptible d'être mise en mouvement de rotation solidairement avec la première partie 220 et de transmettre le mouvement de rotation à la tête de bras d'essuyage 204. On comprend que la seconde partie 222 s'étend sensiblement le long du premier axe longitudinal 224. La seconde partie 222 est un tube creux, qui présente une épaisseur sensiblement constante de l'extrémité dite inférieure 218 à l'extrémité dite supérieure 228.

Tant la première partie 220 que la seconde partie 222 sont faites de matières plastiques. On comprend que ces deux parties pourraient être réalisées dans un même matériau plastique, et éventuellement être formées d'une seule et même pièce, mais qu'il est particulièrement avantageux selon l'invention de pouvoir réaliser la première partie 220 avec une première matière plastique et la seconde partie 222 avec une deuxième matière plastique, différent de la première matière plastique, en matière de résilience, par exemple. Tant la première matière plastique que la seconde matière plastique peuvent avoir des propriétés élastiques de haute qualité, de manière notamment à présenter une stabilité thermique et chimique efficace.

Avantageusement, on saura choisir la matière plastique utilisée pour l'une et l'autre des parties de l'arbre rotatif en fonction de leur rôle. La première partie 220 sera ainsi réalisée dans un matériau résilient, apte à encaisser les à-coups sur chacune des dents des engrenages. Dans une forme de réalisation préférée, la première partie 220 est fabriquée à partir de polyoxyméthylène (POM).

L'arbre rotatif 206, ainsi formé de deux parties 220,222, peut être obtenu par différents procédés de fabrication, parmi lesquels des procédés de co-extrusion ou de surmoulage.

On comprend que le mouvement du bras d'essuyage est obtenu de la sorte : l'arbre de sortie 214 est mu en rotation par l'actionneur, tel que cela est représenté par la flèche C sur la figure 2, dans un sens et dans l'autre. L'arbre de sortie 214 comprend un engrenage à dents hélicoïdales en prise avec les dents du pignon de la première partie 220 de l'arbre rotatif. En conséquence, on créé un mouvement de rotation de la première partie 220 par rapport au premier axe longitudinal 224, dans un sens et dans l'autre, en fonction du sens de rotation de l'arbre de sortie 214. Ce mouvement alternatif de l'arbre rotatif 206, représenté au niveau de l'extrémité opposée par la flèche D, créé un mouvement de va-et-vient de la tête de bras d'essuyage 204.

Cette transmission des efforts entre l'arbre rotatif et la tête de bras d'essuyage est réalisée par les moyens de fixation 208, que l'on va détailler en se référant aux figures 2 et 3. On va notamment décrire le fait que ces moyens de fixation 208 consistent d'une part en une complémentarité de formes entre un premier profil interne d'un alésage interne 302 formé dans la tête de bras d'essuyage et un deuxième profil externe de l'extrémité supérieure 228 de l'arbre rotatif 206, et d'autre part en l'utilisation d'une vis auto-taraudeuse 226 dans un troisième profil interne de l'extrémité libre de l'arbre rotatif.

Tel que cela vient d'être précisé, l'alésage interne 302 formé dans la tête de bras d'essuyage présente un premier profil interne et l'extrémité supérieure 228 de l'arbre rotatif présente une forme extérieure 304 formant un deuxième profil externe. Les formes complémentaires de l'un et l'autre des profils sont déterminés pour que l'arbre rotatif 206 puisse être monté ajusté dans la tête de bras d'essuyage 204. De la sorte, l'arbre rotatif 206 est verrouillé en rotation par rapport à la tête de bras d'essuyage 204 autour du premier axe longitudinal 224, lorsqu'ils sont assemblés, et le mouvement de rotation de l'arbre de sortie peut être transmis à la tête de bras d'essuyage.

Dans l'exemple illustré, tel que cela est visible sur la figure 3, le premier profil interne et le deuxième profil externe ont des sections transversales sensiblement polygonales, et notamment des profils octogonaux sont envisagés mais on comprendra que d'autres formes pourraient être choisies, et par exemple d'autres types de configuration polygonale comme des carrés, des pentagones, des hexagones, tout en comprenant que d'autres profils, comme des cannelures par exemple, pourraient être également choisis, dès lors que l'on facilite un engagement positif de l'extrémité supérieure 228 de l'arbre rotatif 206 dans l'alésage interne 302 de la tête de bras d'essuyage 204.

La vis auto-taraudeuse 226 est insérée à travers la tête du bras d'essuyage 204 et elle s'étend dans un alésage axial 236 formé dans l'arbre rotatif et définissant ledit troisième profil externe. Cet alésage axial 236 s'étend le long du premier axe longitudinal 224, depuis l'extrémité libre à l'opposé du pignon jusqu'à ce pignon, de sorte que la deuxième partie 222 de l'arbre rotatif 206 est creuse.

La vis auto-taraudeuse 226 peut comporter sur la face externe de sa tige des portions de filetage durcies, qui peuvent pénétrer dans une surface lisse 238 de l'alésage interne 236 avec une relative facilité, notamment par un montage en vissage de la vis auto-taraudeuse 226 dans l'alésage interne 236.

On comprend que la vis auto-taraudeuse 226 a deux fonctions : dans une première fonction, elle bloque le mouvement de l'arbre rotatif 206 par rapport à la tête du bras d'essuyage 204 le long du premier axe longitudinal 224, tandis que dans une deuxième fonction, elle déforme sensiblement l'arbre rotatif par écartement radial de sorte que l'arbre rotatif 206 s'expanse à l'intérieur du logement formé à son égard dans la tête de bras d'essuyage, ce qui augmente la solidarisation de l'une et l'autre des pièces ensemble. Dès lors, il importe que l'épaisseur de la paroi de l'arbre rotatif soit suffisamment mince pour que la déformation de la face interne par insertion de la vis auto-taraudeuse génère la déformation de la face externe pour augmenter les forces de friction entre la tête de bras d'essuyage et l'arbre rotatif, tout en ayant une épaisseur suffisante pour permettre le démoulage de la pièce.

On pourra prévoir la longueur de la vis auto-taraudeuse 226 en fonction de l'étendue, selon le premier axe longitudinal 224, d'une zone dans laquelle le premier profil interne de l'alésage interne 302 coopère avec le deuxième profil externe de la forme extérieure 304 de l'arbre rotatif.

Tel que cela est particulièrement visible sur la figure 2, l'arbre rotatif 206 est monté dans le carter moteur de sorte que la seconde partie 222 est montée à l'intérieur d'une douille 212, logée dans un fût du carter 210.

La douille 212 a pour fonction de rattraper les jeux de débattement radial le long d'un deuxième axe 230 (visible sur la figure 2), ces jeux étant dus aux passages des dents successives dans la liaison par engrenages entre la première partie 220 de l'arbre rotatif et l'arbre de sortie 204 de l'actionneur. La douille 212 est à cet effet montée excentrée dans le fût du carter 210 par rapport à la seconde partie 222 de l'arbre rotatif. Dans un mode de réalisation, la douille 212 est en acier fritté.

Un joint d'étanchéité 234 est disposé dans une gorge formée dans la douille 212 autour de l'arbre rotatif 206. A titre d'exemple, le joint 234 peut être un joint à lèvre, étant entendu que d'autres types d'étanchéité peuvent être envisagés. Le joint 234 est notamment configuré pour empêcher l'entrée de salissures dans le carter 210 et pour éviter que du lubrifiant disposé à l'intérieur du carter puisse sortir de celui-ci, alors que la douille 212 et l'arbre rotatif 206 ont un jeu de fonctionnement du au montage excentrique de l'un par rapport à l'autre.

Par ailleurs, tel qu'illustré sur la figure 2, il peut être prévu une griffe de fixation 240, qui permet de figer la position axiale de l'arbre rotatif 206 par rapport à la tête de bras d'essuyage 204.

On pourra prévoir d'équiper l'ensemble d'entraînement d'un capteur angulaire (ici non représenté), notamment sur un bossage de la première partie 220 qui s'étend en saillie à l'opposé de la deuxième partie 222, sensiblement centré sur le premier axe longitudinal 224. Le capteur angulaire peut être configuré pour détecter une rotation du pignon formant la première partie 220 de l'arbre rotatif et pour permettre à des moyens de commande associés de piloter l'actionneur 404, et donc l'arbre rotatif en rotation, à l'intérieur d'une plage angulaire prédéfinie, pour réaliser correctement le mouvement de va-et-vient du bras d'essuyage 202.

On va maintenant se référer à la figure 4, pour décrire plus en détail l'application de la présente invention, c'est-à-dire l'utilisation de l'ensemble d'entraînement 200 pour un ensemble d'essuyage 402. Sur le véhicule illustré, on a prévu deux tels ensembles d'essuyage 402, 402', comportant chacun un ensemble d'entraînement 200, 200' associés à des actionneurs 404, 404', pour le nettoyage d'un pare-brise 406 du véhicule 400. Les ensembles d'entraînement 200, 200' peuvent être positionnés au voisinage d'un capot de véhicule 408.

Comme cela a été précisé précédemment, l'actionneur 404 et son arbre de sortie 214 entraînent en rotation l'arbre rotatif 206. Étant donné que la première partie 220 pivote autour du premier axe longitudinal dans la direction 224, une rotation correspondante est transmise à la seconde partie 222. Compte tenu de l'engagement de l'alésage interne 302 par rapport à la forme extérieure 304, via les profils polygonaux, l'arbre rotatif 206 entraîne en rotation la tête de bras d'essuyage 204 et donc transfère le mouvement au bras d'essuyage 202, notamment dans un mouvement de va-et-vient, illustré par les flèches E et F de la figure 4.

La fabrication de l'arbre rotatif 206 à partir d'une matière plastique permet de réduire substantiellement le poids de l'ensemble d'entraînement 200. Ce poids réduit présente l'avantage de fournir un ensemble d'essuyage associé à moindre consommation d'énergie. Par ailleurs, l'arbre rotatif en matière plastique tel qu'il vient d'être décrit permet de proposer un assemblage de l'ensemble d'entraînement beaucoup plus facile que ce qui est traditionnellement pratiqué.

## Revendications

1. Ensemble d'entraînement pour un bras d'essuyage (202), dans lequel ledit bras d'essuyage (202) présente une tête de bras d'essuyage (204) entraîné par un arbre rotatif (206) auquel ladite tête de bras d'essuyage (204) est fixée par des moyens de fixation (208), ledit arbre rotatif (206) étant entraîné par un arbre de sortie (214) d'un actionneur, ledit arbre rotatif (206) étant réalisé avec au moins une matière plastique,
**caractérisé en ce que** ledit arbre rotatif (206) comporte une première partie (220) adaptée pour coopérer avec ledit arbre de sortie (214) ainsi qu'une seconde partie (222) adaptée pour être solidaire de la tête de bras d'essuyage (204), chaque partie de l'arbre rotatif (206) étant réalisé en matière en plastique,
et **en ce que** la seconde partie (222) présente la forme d'un tube creux s'étendant le long d'un premier axe longitudinal (224), avec une première extrémité (228) portant lesdits moyens de fixation (208) de la tête de bras d'essuyage (204) et avec l'extrémité opposée étant prolongée par ladite première partie (220), le tube creux de la seconde partie (222) ayant de préférence une épaisseur constante.

2. Ensemble d'entraînement selon la revendication 1, **caractérisé en ce que** ladite première partie (220) est un pignon.

3. Ensemble d'entraînement selon l'une des revendications 1 et 2, **caractérisé en ce que** la première partie (220) s'étend sensiblement perpendiculairement à la seconde partie (222).

4. Ensemble d'entraînement selon l'une des revendications 1 à 3, **caractérisé en ce que** la première partie (220) et la seconde partie (222) sont réalisées en une pièce monobloc.

5. Ensemble d'entraînement selon l'une des revendications 1 à 4, **caractérisé en ce que** la première partie (220) est fabriquée à partir d'une première matière plastique tandis que la seconde partie (222) est fabriquée à partir d'une deuxième matière plastique, la première matière plastique étant différente de la seconde matière plastique.

6. Ensemble d'entraînement selon la revendication précédente, **caractérisé en ce que** la première matière plastique est plus résistante à l'usure et/ou aux chocs que la deuxième matière plastique.

7. Ensemble d'entraînement selon l'une des revendications 1 à 6, **caractérisé en ce que** la première partie (220) est fabriquée à partir de polyoxyméthylène (POM).

8. Ensemble d'entraînement selon l'une des revendications précédentes, **caractérisé en ce que** la tête de bras d'essuyage (204) comprend un alésage intérieur (302) avec un premier profil interne et **en ce que** l'arbre rotatif (206) comprend à une première extrémité (228) une forme extérieure (304) avec un deuxième profil externe, le premier profil interne présentant une forme complémentaire de celle du deuxième profil externe de manière à coopérer longitudinalement, le premier profil interne et le deuxième profil externe présentant de préférence chacun une forme polygonale.

9. Ensemble d'entraînement selon l'une quelconque des revendications précédentes, **caractérisé en ce que** lesdits moyens de fixation (208) comportent une vis auto-taraudeuse (226), insérée dans un alésage (236) formé longitudinalement dans l'arbre rotatif (206), la vis auto-taraudeuse (226) s'étendant de préférence longitudinalement sur une distance équivalente à la zone de recouvrement du premier profil interne par le deuxième profil externe.

10. Ensemble d'entraînement selon la revendication 9, **caractérisé en ce que** l'alésage (236) présente une paroi lisse (238).

11. Ensemble d'entraînement selon l'une quelconque des revendications 1 à 10, **caractérisé en ce que** l'arbre rotatif (206) est logé dans un carter moteur (210) de sorte que la première partie (220) s'étend à l'intérieur du carter tandis que la seconde partie (222) s'étend depuis ladite première partie (220) jusqu'à l'extérieur du carter (210) pour être solidaire de la tête du bras d'essuyage (204), ladite seconde partie (222) étant monté à rotation à l'intérieur d'un fût du carter moteur (210).

12. Ensemble d'entraînement selon la revendication 11, **caractérisé en ce que** la seconde partie (222) de l'arbre rotatif (206) est montée à l'intérieur dudit fût par l'intermédiaire d'une douille (212) en acier fritté, la douille (212) étant de préférence montée dans ledit fût de façon excentrée par rapport à ladite seconde partie (222).

13. Ensemble d'essuyage de vitre d'un véhicule automobile comprenant au moins un ensemble d'entraînement (200) selon l'une quelconque des revendications précédentes.

## Patentansprüche

1. Antriebsanordnung für einen Wischarm (202), wobei der Wischern (202) einen Wischarmkopf (204) aufweist, der von einer rotierenden Welle (206) angetrieben wird, an der der Wischarmkopf (204) durch Befestigungsmittel (208) befestigt ist, wobei die rotierende Welle (206) von einer Ausgangswelle (214) eines Aktuators angetrieben wird, wobei die rotierende Welle (206) mit mindestens einem Kunststoff hergestellt ist,
**dadurch gekennzeichnet, dass** die drehende Welle (206) einen ersten Teil (220) umfasst, der angepasst ist, um mit der Ausgangswelle (214) zusammenzuwirken, sowie einen zweiten Teil (222), der angepasst ist, um fest mit dem Wischarm (204) verbunden zu sein, wobei jeder Teil der rotierenden Welle (206) aus Kunststoff hergestellt ist,
und dass der zweite Teil (222) die Form einer hohlen Röhre aufweist, die sich entlang einer ersten Längsachse (224) erstreckt, mit einem ersten Ende (228), das die Befestigungsmittel (208) des Wischarmkopfs (204) trägt, und wobei das entgegengesetzte Ende durch den ersten Teil (220) verlängert ist, wobei die hohle Röhre des zweiten Teils (222) bevorzugt eine konstante Stärke aufweist.

2. Antriebsanordnung nach Anspruch 1, **dadurch gekennzeichnet, dass** der erste Teil (220) ein Ritzel ist.

3. Antriebsanordnung nach einem der Ansprüche 1 und 2, **dadurch gekennzeichnet, dass** sich der erste Teil (220) im Wesentlichen senkrecht zu dem zweiten Teil (222) erstreckt.

4. Antriebsanordnung nach einem der Ansprüche 1 bis 3, **dadurch gekennzeichnet, dass** der erste Teil (220) und der zweite Teil (222) aus einem einteiligen Teil hergestellt sind.

5. Antriebsanordnung nach einem der Ansprüche 1 bis 4, **dadurch gekennzeichnet, dass** der erste Teil (220) ausgehend von einem ersten Kunststoff hergestellt ist, während der zweite Teil (222) ausgehend von einem zweiten Kunststoff gebildet ist, wobei der erste Kunststoff von dem zweiten Kunststoff unterschiedlich ist.

6. Antriebsanordnung nach dem vorstehenden Anspruch, **dadurch gekennzeichnet, dass** der erste Kunststoff gegen Abnutzung und/oder Stöße widerstandsfähiger ist als der zweite Kunststoff.

7. Antriebsanordnung nach einem der Ansprüche 1 bis 6, **dadurch gekennzeichnet, dass** der erste Teil (220) ausgehend von Polyoximethylen (POM) hergestellt ist.

8. Antriebsanordnung nach einem der vorstehenden Ansprüche, **dadurch gekennzeichnet, dass** der Wischarmkopf (204) eine Innenbohrung (302) mit einem ersten internen Profil umfasst, und dass die rotierende Welle (206) an einem ersten Ende (228) eine äußeren Form (304) mit einem zweiten äußeren Profil umfasst, wobei das erste innere Profil eine komplementäre Form zu der des zweiten äußeren Profil derart aufweist, dass sie längs zusammenarbeiten, wobei das erste innere Profil und das zweite äußere Profil bevorzugt jeweils eine Vieleckform aufweisen.

9. Antriebsanordnung nach einem der vorstehenden Ansprüche, **dadurch gekennzeichnet, dass** die Befestigungsmittel (208) eine selbstschneidende Schraube (226) umfassen, die in eine Bohrung (236) eingesetzt ist, die sich längs in der rotierenden Welle (206) erstreckt, wobei sich die selbstschneidende Schraube (226) bevorzugt längs auf einer Distanz erstreckt, die gleich der Abdeckungszone des ersten inneren Profils durch das zweite äußere Profil ist.

10. Antriebsanordnung nach Anspruch 9, **dadurch gekennzeichnet, dass** die Bohrung (236) eine glatte Wand (238) aufweist.

11. Antriebsanordnung nach einem der Ansprüche 1 bis 10, **dadurch gekennzeichnet, dass** die rotierende Welle (206) in einem Motorgehäuse (210) derart aufgenommen ist, dass sich der erste Teil (220) in dem Inneren des Gehäuses erstreckt, während sich der zweite Teil (222) von dem ersten Teil (220) bis zu dem Äußeren des Gehäuses (210) erstreckt, um fest mit dem Wischarmkopf (204) verbunden zu sein, wobei der zweite Teil (222) drehend im Inneren eines Schafts des Motorgehäuses (210) montiert ist.

12. Antriebsanordnung nach Anspruch 11, **dadurch gekennzeichnet, dass** der zweite Teil (222) der rotierenden Welle (206) in dem Inneren des Schafts über eine Hülse (212) aus Sinterstahl montiert ist, wobei die Hülse (212) bevorzugt in dem Schaft bezüglich des zweiten Teils (222) exzentrisch montiert ist.

13. Scheibenwischanordnung eines Kraftfahrzeugs, die mindestens eine Antriebseinheit (200) nach einem der vorstehenden Ansprüche umfasst.

## Claims

1. A drive assembly for a wiper arm (202), in which said wiper arm (202) has a wiper-arm head (204) driven by a rotating shaft (206), to which said wiper-arm head (204) is fastened by fastening means (208), said rotating shaft (206) being driven by an output shaft (214) of an actuator, said rotating shaft (206) being made from at least one plastic material,
**characterized in that** said rotating shaft (206) includes a first portion (220) adapted to cooperate with said output shaft (214) as well as a second portion (222) adapted to be attached to the wiper-arm head (204), each portion of the rotating shaft (206) being made from a plastic material,
and **in that** the second portion (222) exhibits the form of a hollow tube extending in a first longitudinal axis (224), with a first extremity (228) supporting said fastening means (208) of the wiper-arm head (204), and with the opposite extremity being extended by said first portion (220), the hollow tube of the second portion (222) having preferably a constant thickness.

2. The drive assembly as claimed in claim 1, **characterized in that** said first portion (220) is a pinion.

3. The drive assembly as claimed in one of claims 1 and 2, **characterized in that** the first portion (220) extends substantially perpendicularly to the second portion (222).

4. The drive assembly as claimed in one of claims 1 to 3, **characterized in that** the first portion (220) and the second portion (222) are made in a single piece.

5. The drive assembly as claimed in one of claims 1 to 4, **characterized in that** the first portion (220) is made from a first plastic material, whereas the second portion (222) is made from a second plastic material, the first plastic material being different from the second plastic material.

6. The drive assembly as claimed in the preceding claim, **characterized in that** the first plastic material is more resistant to wear and/or to impacts than the second plastic material.

7. The drive assembly as claimed in one of claims 1 to 6, **characterized in that** the first portion (220) is made from polyoxymethylene (POM).

8. The drive assembly as claimed in one of the preceding claims, **characterized in that** the wiper-arm head (204) comprises an internal bore (302) having a first internal profile, and **in that** the rotating shaft (206) comprises at a first extremity (228) an external form (304) having a second external profile, the first internal profile exhibiting a complementary form to that of the second external profile in such a way as to cooperate longitudinally, the first internal profile and the second external profile each exhibiting preferably a polygonal form.

9. The drive assembly as claimed in any one of the preceding claims, **characterized in that** said fastening means (208) include a self-tapping screw (226), inserted in a bore (236) formed longitudinally in the rotating shaft (206), the self-tapping screw (226) extending preferably longitudinally for a distance equivalent to the area of overlapping of the first internal profile by the second internal profile.

10. The drive assembly as claimed in claim 9, **characterized in that** the bore (236) exhibits a smooth wall (238).

11. The drive assembly as claimed in any one of claims 1 to 10, **characterized in that** the rotating shaft (206) is housed in a motor casing (210) in such a way that the first portion (220) extends in the interior of the casing, whereas the second portion (222) extends from said first portion (220) as far as the exterior of the motor casing (210) in order to be attached to the wiper-arm head (204), said second portion (222) being rotatably mounted in the interior of a barrel of the motor casing (210) .

12. The drive assembly as claimed in claim 11, **characterized in that** the second portion (222) of the rotating shaft (206) is mounted in the interior of said barrel by means of a bushing (212) made from sintered steel, the bushing (212) being preferably mounted in said barrel in an eccentric manner in relation to said second portion (222).

13. A window-wiping assembly of a motor vehicle comprising at least one drive assembly (200) as claimed in any one of the preceding claims.
